# EUROPEAN PATENT APPLICATION

(11) **EP 3 882 817 A2**
(43) Date of publication of application: **22.09.2021**
(21) Application number: 21180801.9
(22) Date of filing: 22.06.2021
(51) Int. Cl.: G06K 9/00, G06K 9/62

(54) **METHOD, APPARATUS AND DEVICE FOR RECOGNIZING BILL AND STORAGE MEDIUM**

(30) Priority: 18.12.2020 CN 202011501307
(71) Applicant: Beijing Baidu Netcom Science and Technology Co., Ltd., Beijing 100085 (CN)
(72) Inventor: HUANG, Ju, Beijing, 100085 (CN); XIE, Qunyi, Beijing, 100085 (CN); LI, Yulin, Beijing, 100085 (CN); QIN, Xiameng, Beijing, 100085 (CN); YAO, Kun, Beijing, 100085 (CN); HAN, Junyu, Beijing, 100085 (CN)
(74) Representative: V.O.

(57) **Abstract**

The present disclosure discloses a method, apparatus and device for recognizing a bill, and a storage medium. The method comprises: acquiring a bill image; inputting the bill image into a feature extraction network layer of a pre-trained bill recognition model, to obtain a bill key field feature map and a bill key field value feature map of the bill image; inputting the bill key field feature map into a first head network layer of the bill recognition model, to obtain a bill key field; processing the bill key field value feature map by a second head network layer of the bill recognition model, to obtain a bill key field value, the feature extraction network layer being respectively connected with the first head network layer and the second head network layer; and generating structured information of the bill image based on the bill key field and the bill key field value.

## Description

### TECHNICAL FIELD

Embodiments of the present disclosure relate to the field of computer technology, particularly to the field of artificial intelligence technology such as computer vision, natural language processing and deep learning, and more particularly to a method, apparatus and device for recognizing a bill, and relates to a computer readable storage medium.

### BACKGROUND

A bill is an important text carrier for carrying structured information, and is widely used in various business scenarios. For different types of bills, the layouts thereof may be complicated, and the items thereon are numerous and diverse. In addition, a large number of bills are used for reimbursement and review every day, resulting in a high labor cost and a low accounting efficiency.

At present, the structured information may be extracted from the bills by the following approaches: 1) a concerned field is classified and positioned by means of a detection, to obtain the structured information; or 2) the structured information is obtained by performing a named entity recognition (NER) or a relationship connection on the text information obtained by analyzing an optical character recognition (OCR)

### SUMMARY

Embodiments of the present disclosure provide a method, apparatus and device for recognizing a bill. Embodiments of the present disclosure also provide a computer readable storage medium .

In a first aspect, an embodiment of the present disclosure provides a method for recognizing a bill, comprising: acquiring a bill image; inputting the bill image into a feature extraction network layer of a pre-trained bill recognition model, to obtain a bill key field feature map and a bill key field value feature map of the bill image; inputting the bill key field feature map into a first head network layer of the bill recognition model, to obtain a bill key field; processing the bill key field value feature map by using a second head network layer of the bill recognition model, to obtain a bill key field value, wherein the feature extraction network layer being respectively connected with the first head network layer and the second head network layer; and generating structured information of the bill image based on the bill key field and the bill key field value.

In a second aspect, an embodiment of the present disclosure provides an apparatus for recognizing a bill, comprising: an information acquiring module, configured to acquire a bill image; a first obtaining module, configured to input the bill image into a feature extraction network layer of a pre-trained bill recognition model, to obtain a bill key field feature map and a bill key field value feature map of the bill image; a second obtaining module, configured to input the bill key field feature map into a first head network layer of the bill recognition model, to obtain a bill key field; a third obtaining module, configured to process the bill key field value feature map by using a second head network layer of the bill recognition model, to obtain a bill key field value, wherein the feature extraction network layer being respectively connected with the first head network layer and the second head network layer; and an information generating module, configured to generate structured information of the bill image based on the bill key field and the bill key field value.

In a third aspect, an embodiment of the present disclosure provides an electronic device, and the electronic device includes: at least one processor; and a memory communicatively connected with the at least one processor, where the memory stores instructions executable by the at least one processor, and the instructions, when executed by the at least one processor, cause the at least one processor to execute the method for recognizing a bill as described in any one of the implementations of the first aspect.

In a fourth aspect, an embodiment of the present disclosure provides a non-transitory computer readable storage medium storing computer instructions, where the computer instructions cause a computer to execute the method for recognizing a bill as described in any one of the implementations of the first aspect.

In a fifth aspect, an embodiment of the present disclosure provides a computer program product, comprising a computer program, wherein the computer program, when executed by a processor, implements the method for recognizing a bill as described in any one of the implementations of the first aspect.

According to the method, apparatus and device for recognizing a bill and the storage medium that are provided in the embodiments of the present disclosure, the bill image is first acquired. Afterwards, the bill image is inputted into the feature extraction network layer of the pre-trained bill recognition model, to obtain the bill key field feature map and the bill key field value feature map of the bill image. Next, the bill key field feature map is inputted into the first head network layer of the bill recognition model, to obtain the bill key field. Then, the bill key field value feature map is processed by using the second head network layer of the bill recognition model, to obtain the bill key field value, the feature extraction network layer being respectively connected with the first head network layer and the second head network layer. Finally, the structured information of the bill image is generated based on the bill key field and the bill key field value. According to the present disclosure, the bill key field feature map and the bill key field value feature map are obtained by using the feature extraction network layer of the bill recognition model. Then, based on the first head network layer and the second head network layer of the bill recognition model, the recognition for the bill key field and the bill key field value included in the structured information in the bill image may be accurately implemented.

It should be understood that the content described in this part is not intended to identify key or important features of the embodiments of the present disclosure, and is not used to limit the scope of the present disclosure. Other features of the present disclosure will be easily understood through the following description.

### BRIEF DESCRIPTION OF THE DRAWINGS

After reading detailed descriptions for non-limiting embodiments given with reference to the following accompanying drawings, other features, objectives and advantages of the present disclosure will be more apparent. The accompanying drawings are used for a better understanding of the scheme, and do not constitute a limitation to the present disclosure. Here:
Fig. 1 illustrates an exemplary system architecture in which the present disclosure may be applied;
Fig. 2 is a flowchart of an embodiment of a method for recognizing a bill according to the present disclosure;
Fig. 3 is a first schematic diagram of a bill recognition model according to the present disclosure;
Fig. 4 is a diagram of an application scenario of the method for recognizing a bill according to the present disclosure;
Fig. 5 is a flowchart of another embodiment of the method for recognizing a bill according to the present disclosure;
Fig. 6 is a second schematic diagram of the bill recognition model according to the present disclosure;
Fig. 7 is a flowchart of an embodiment in which the bill recognition model is trained according to the present disclosure;
Fig. 8 is a schematic structural diagram of an embodiment of an apparatus for recognizing a bill according to the present disclosure; and
Fig. 9 is a block diagram of an electronic device used to implement a method for recognizing a bill according to embodiments of the present disclosure.

### DETAILED DESCRIPTION OF EMBODIMENTS

Exemplary embodiments of the present disclosure are described below in combination with the accompanying drawings, and various details of the embodiments of the present disclosure are included in the description to facilitate understanding, and should be considered as exemplary only. Accordingly, it should be recognized by one of ordinary skills in the art that various changes and modifications may be made to the embodiments described herein without departing from the scope and spirit of the present disclosure. Also, for clarity and conciseness, descriptions for well-known functions and structures are omitted in the following description.

It should be noted that the embodiments in the present disclosure and the features in the embodiments may be combined with each other on a non-conflict basis. The present disclosure will be described below in detail with reference to the accompanying drawings and in combination with the embodiments.

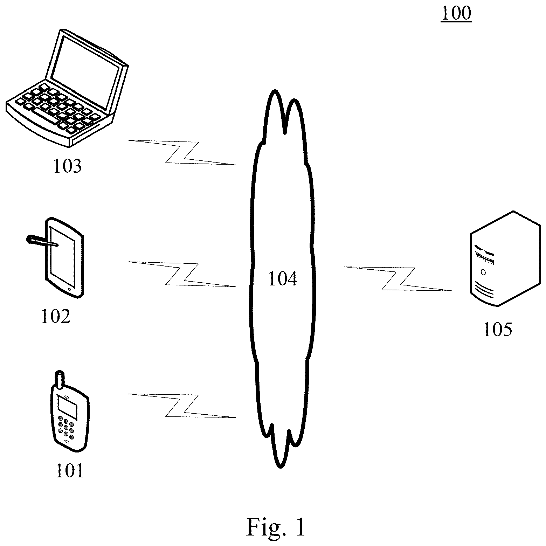

Fig. 1 illustrates an exemplary system architecture 100 in which an embodiment of a method for recognizing a bill or an apparatus for recognizing a bill according to the present disclosure may be applied.

As shown in Fig. 1, the system architecture 100 may include terminal devices 101, 102 and 103, a network 104 and a server 105. The network 104 serves as a medium providing a communication link between the terminal devices 101, 102 and 103 and the server 105. The network 104 may include various types of connections, for example, wired or wireless communication links, or optical fiber cables.

A user may use the terminal devices 101, 102 and 103 to interact with the server 105 via the network 104 to receive or send a message (e.g., the terminal devices 101, 102 and 103 may acquire a trained bill recognition model from the server 105, or the server 105 may acquire a bill image from the terminal devices 101, 102 and 103) or the like. Various communication client applications (e.g., an image processing application) may be installed on the terminal devices 101, 102 and 103.

The terminal devices 101, 102 and 103 may input the bill image into a feature extraction network layer of a pre-trained bill recognition model, to obtain a bill key field feature map and a bill key field value feature map of the bill image. Then, the terminal devices 101, 102 and 103 may input the above bill key field feature map into a first head network layer of the above bill recognition model to obtain a bill key field. Finally, the terminal devices 101, 102 and 103 may process the bill key field value feature map by using a second head network layer of the bill recognition model, to obtain a bill key field value.

The terminal devices 101, 102 and 103 may be hardware or software. When being the hardware, the terminal devices 101, 102 and 103 may be various electronic devices supporting information interaction, the electronic devices including, but not limited to, a smartphone, a tablet computer, a laptop portable computer, a desktop computer, and the like. When being the software, the terminal devices 101, 102 and 103 may be installed in the above listed electronic devices. The terminal devices may be implemented as a plurality of pieces of software or a plurality of software modules, or as a single piece of software or a single software module, which will not be particularly defined here.

The server 105 may be a server providing various services. For example, the server 105 may be a backend server that recognizes a bill. The server 105 may first input the bill image into the feature extraction network layer of the pre-trained bill recognition model, to obtain the bill key field feature map and the bill key field value feature map of the bill image. Then, the server 105 may input the above bill key field feature map into the first head network layer of the above bill recognition model to obtain the bill key field. Finally, the server 105 may process the bill key field value feature map by using the second head network layer of the bill recognition model, to obtain the bill key field value.

It should be noted that the server 105 may be hardware or software. When being the hardware, the server 105 may be implemented as a distributed server cluster composed of a plurality of servers, or may be implemented as a single server. When being the software, the server 105 may be implemented as a plurality of pieces of software or a plurality of software modules (e.g., software or software modules for providing a distributed service), or may be implemented as a single piece of software or a single software module, which will not be particularly defined here.

It should be noted that the method for recognizing a bill provided in the embodiments of the present disclosure may be performed by the terminal devices 101, 102 and 103, or may be performed by the server 105.

It should also be noted that the terminal devices 101, 102 and 103 may locally store the trained bill recognition model. At this time, the network 104 and the server 105 may not be provided in the exemplary system architecture 100.

It should also be noted that the server 105 may also locally store the bill image, and may acquire the bill image locally. At this time, the terminal devices 101, 102 and 103 and the network 104 may not be provided in the exemplary system architecture 100.

It should be appreciated that the numbers of the terminal devices, the networks, and the servers in Fig. 1 are merely illustrative. Any number of terminal devices, networks, and servers may be provided based on actual requirements.

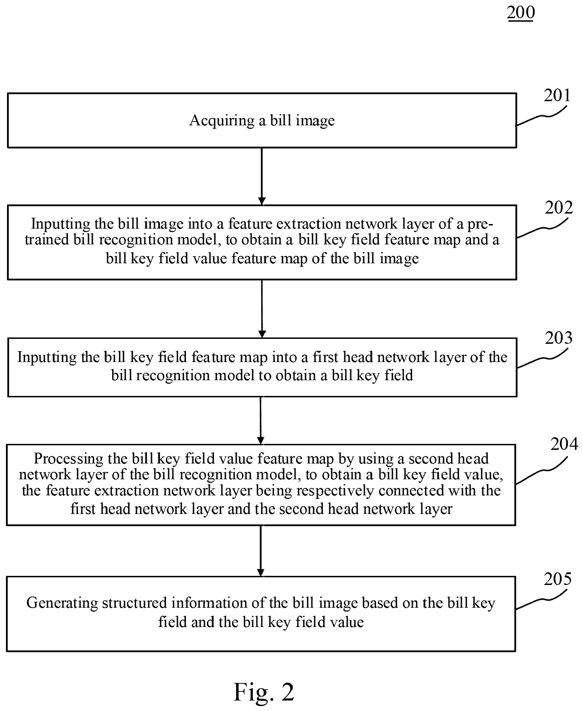

Further referring to Fig. 2, Fig. 2 illustrates a flow 200 of an embodiment of a method for recognizing a bill according to the present disclosure. The method for recognizing a bill includes the following steps:
Step 201, acquiring a bill image.

In this embodiment, an executing body (e.g., the server 105 or the terminal devices 101, 102 and 103 shown in Fig. 1) of the method for recognizing a bill may obtain a bill image by scanning a paper bill, according to a photographing apparatus on the executing body or an external photographing apparatus

The above paper bill may include a medical bill, a tax invoice, a traffic bill, and the like. For example, the medical bill includes at least information of a person in treatment, for example, a personal name and an identity number, and may further include information of a treatment, for example, a treatment date and a treatment hospital.

Step 202, inputting the bill image into a feature extraction network layer of a pre-trained bill recognition model, to obtain a bill key field feature map and a bill key field value feature map of the bill image.

In this embodiment, the above executing body may input the bill image into the feature extraction network layer of the pre-trained bill recognition model, to obtain the bill key field feature map and the bill key field value feature map of the bill image. The above bill key field feature map may be a feature map including all features in the bill image that are related to a bill key field feature. The above bill key field value feature map may be a feature map including all features in the bill image that are related to a bill key field value feature. The above bill recognition model may include a deep learning network (DLN), for example, a convolutional neural network (CNN). Here, the above bill recognition model may generally include the feature extraction network layer, a first head network layer, and a second head network layer. The above feature extraction network layer may be used to extract, from the above bill image, the bill key field feature map and the bill key field value feature map of the bill image.

Step 203, inputting the bill key field feature map into a first head network layer of the bill recognition model to obtain a bill key field.

In this embodiment, the above executing body may input the bill key field feature map into the first head network layer of the above bill recognition model, to obtain the bill key field in the bill image. The above first head network layer may be used to determine the bill key field according to the bill key field feature map.

In a particular example, the first head network layer may include a plurality of convolutional layers. The bill key field feature map is inputted into the first head network layer to obtain a geometric map and a confidence score map. Then, the bill key field is determined based on the geometric map (geo map) and the confidence score map (score map).

Step 204, processing the bill key field value feature map by using a second head network layer of the bill recognition model, to obtain a bill key field value, the feature extraction network layer being respectively connected with the first head network layer and the second head network layer.

In this embodiment, the above executing body may input the bill key field value feature map into the second head network layer of the above bill recognition model to, obtain the bill key field value. The above second head network layer may be used to determine the bill key field value according to the bill key field value feature map.

In a particular example, the second head network layer may include a plurality of convolutional layers. The bill key field value feature map is inputted into the second head network layer, to obtain a geometric map and a confidence score map. Then, the bill key field value is determined based on the geometric map (geo map) and the confidence score map (score map).

It should be noted that, as compared with a detection for the bill key field that is performed using a single head network, the classification accuracy is improved by 2.5% and the detection accuracy is improved by 2% through the recognition for the bill key field and the bill key field value that is performed using the first head network layer and the second head network layer.

Step 205, generating structured information of the bill image based on the bill key field and the bill key field value.

In this embodiment, the above executing body may position the bill key field and the bill key field value in the bill image through an optical character recognition (OCR), and then may generate the structured information of the bill image according to the bill key field and the bill key field value.

In a particular example, the position of the bill key field corresponding to "Name" in the bill image is A1, the position of the bill key field value corresponding to "Xiaowang" in the bill image is A2, the position of the bill key field corresponding to "Age" in the bill image is B1, and the position of the bill key field value corresponding to "18 years old" in the bill image is B2. Then, the above positions are respectively compared with a preset position, to determine that the bill key field corresponding to "Name" and the bill key field value corresponding to "Xiaowang" constitute a key value pair, and the bill key field corresponding to "Age" and the bill key field value corresponding to "18 years old" constitute a key value pair. Accordingly, the structured information of the bill image is generated.

In this embodiment, the above executing body may also generate the structured information of the bill image according to a preset bill key field and a preset bill key field value.

In a particular example, an image of a medical bill is taken as an example. The preset bill key field refers to "Treatment category," and the preset bill key field value refers to "On-the-job treatment," "Self-payment," or the like. The preset bill key field refers to "Hospital," and the preset bill key field value refers to "** Hospital." Based on the above bill recognition model, it is recognized that the bill key field is "Hospital" and the bill key field value is "Hospital A." Then, the above executing body compares the recognized bill key field "Hospital" and the recognized bill key field value "Hospital A" with the above preset bill key field and the above preset bill key field value, to determine that "Hospital" and "Hospital A" are a key value pair, thus implementing the generation for the structured information of the bill image.

According to the method and apparatus for recognizing a bill, the device and the storage medium that are provided in the embodiments of the present disclosure, the bill image is first acquired. Afterwards, the bill image is inputted into the feature extraction network layer of the pre-trained bill recognition model, to obtain the bill key field feature map and the bill key field value feature map of the bill image. Next, the bill key field feature map is inputted into the first head network layer of the bill recognition model to obtain the bill key field. Then, the bill key field value feature map is processed by using the second head network layer of the bill recognition model to obtain the bill key field value, the feature extraction network layer being respectively connected with the first head network layer and the second head network layer. Finally, the structured information of the bill image is generated based on the bill key field and the bill key field value. According to the present disclosure, the feature extraction network layer of the bill recognition model is used to obtain the bill key field feature map and the bill key field value feature map. Then, based on the first head network layer and the second head network layer of the bill recognition model, the recognition for the bill key field and the bill key field value included in the structured information in the bill image may be accurately implemented.

In some alternative implementations of this embodiment, the feature extraction network layer includes a backbone network layer and a feature pyramid network layer.

In this implementation, the above executing body may use the backbone network layer to perform a feature extraction on the bill image, and then, use the feature pyramid network (FPN) layer to extract the feature extracted through the backbone network layer, to obtain the bill key field feature map and the bill key field value feature map.

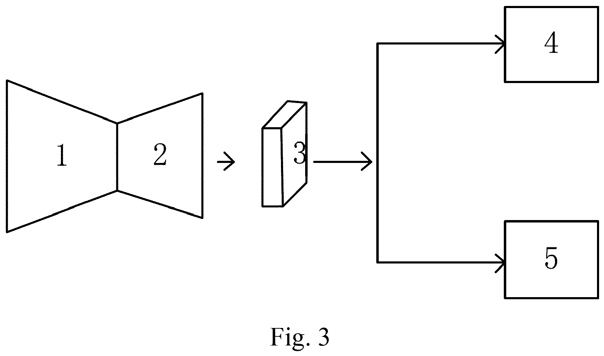

In a particular example, in Fig. 3, the bill recognition model includes: a backbone network layer 1, a feature pyramid network layer 2, a bill key field feature map and a bill key field value feature map 3, a first head network layer 4, and a second head network layer 5.

The backbone network layer may include, but not limited to, a ResNeSt-200 network and a ResNeSt-50 network. The feature pyramid network layer may include, but not limited to, an n-layer (n is a positive integer) feature pyramid network layer. For example, the bill image is processed using the n-layer feature pyramid network layer, and thus, feature maps of n resolutions may be obtained.

It should be noted that the n feature maps outputted by the n-layer feature pyramid network layer decrease in resolution from the lower order to the higher order, and in the drawing, are similar in shape to a pyramid. In these feature maps, the features outputted by the backbone network layer are extracted at different scales and levels.

In this implementation, the extraction for the bill key field feature map and the bill key field value feature map in the bill image is implemented through the backbone network layer and the feature pyramid network layer.

In some alternative implementations of this embodiment, the bill recognition model further includes a first convolutional layer. The feature extraction network layer, the first convolutional layer and the first head network layer are connected in sequence.

In this implementation, the bill recognition model may further include the first convolutional layer. A number of first convolutional layers may be one or more.

In a particular example, when the number of the first convolutional layers is more than one, a plurality of neurons may be provided on the first convolutional layers. The input of each neuron is connected with the local receptive field of a previous convolutional layer. A convolution operation is performed on the data of the local receptive field of the previous convolutional layer, to extract a feature of the local receptive field. Once the feature of the local receptive field is extracted, the positional relationship between the feature and an other feature is determined accordingly. Then, feature mapping is performed to obtain feature information, and the feature information is outputted to a next convolutional layer to proceed with similar processes.

In this implementation, a convolution operation may be performed on the bill key field feature map through the first convolutional layer, to further enhance a mapping relationship between the bill key field feature map and the bill key field, thereby implementing the accurate recognition for the bill key field.

In some alternative implementations of this embodiment, the bill recognition model further includes a second convolutional layer. Here, the feature extraction network layer, the second convolutional layer and the second head network layer are connected in sequence.

In this implementation, the bill recognition module may further include the second convolutional layer. A number of second convolutional layers may be one or more.

In a particular example, when the number of the second convolutional layers is more than one, a plurality of neurons may be provided on the second convolutional layers. The input of each neuron is connected with the local receptive field of a previous convolutional layer. A convolution operation is performed on the data of the local receptive field of the previous convolutional layer, to extract a feature of the local receptive field. Once the feature of the local receptive field is extracted, the positional relationship between the feature and an other feature is determined accordingly. Then, feature mapping is performed to obtain feature information, and the feature information is outputted to a next convolutional layer to proceed with similar processes.

In this implementation, a convolution operation may be performed on the bill key field value feature map through the second convolutional layer, to further enhance a mapping relationship between the bill key field value feature map and the bill key field value, thereby implementing the accurate recognition for the bill key field value.

In some alternative implementations of this embodiment, the bill recognition model further includes the first convolutional layer and the second convolutional layer. Here, the feature extraction network layer, the second convolutional layer and the second head network layer are connected in sequence.

In this implementation, the bill recognition module may further include the first convolutional layer and the second convolutional layer. Here, a number of first convolutional layers and/or a number of second convolutional layers is one or more.

In this implementation, the convolution operation may be performed on the bill key field feature map through the first convolutional layer and the convolution operation may be performed on the bill key field value feature map through the second convolutional layer, to further enhance the mapping relationship between the bill key field feature map and the bill key field and the mapping relationship between the bill key field value feature map and the bill key field value, thereby implementing the accurate recognition for the bill key field and the bill key field value.

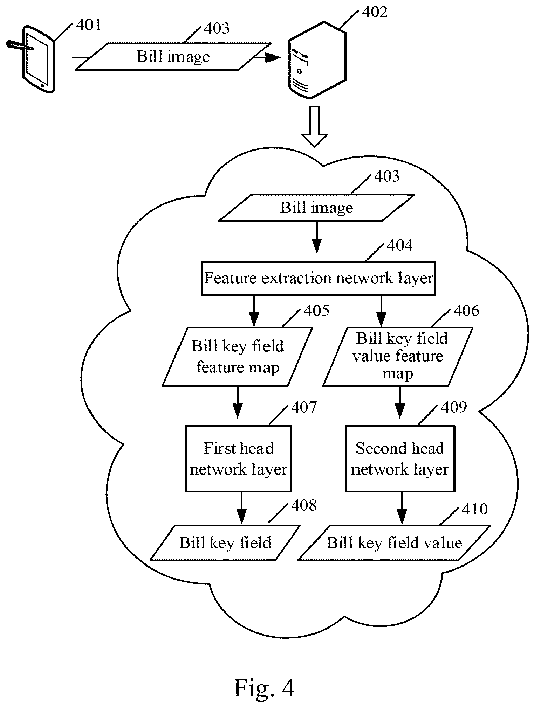

For ease of understanding, an application scenario in which the method for recognizing a bill according to the embodiment of the present disclosure may be implemented is provided below. As shown in Fig. 4, after receiving a bill image 403 sent by a terminal device 401, a server 402 may input the bill image 403 into a feature extraction network layer 404 of a pre-trained bill recognition model, to obtain a bill key field feature map 405 and a bill key field value feature map 406 of the bill image. Then, the bill key field feature map 405 may be inputted into a first head network layer 407 of the above bill recognition model to obtain a bill key field 408. Next, the bill key field value feature map is processed using a second head network layer 409 of the bill recognition model, to obtain a bill key field value 410. Here, the feature extraction network layer 404 is respectively connected with the first head network layer 407 and the second head network layer 409. Finally, the server 402 may generate structured information of the bill image based on the bill key field 408 and the bill key field value 410.

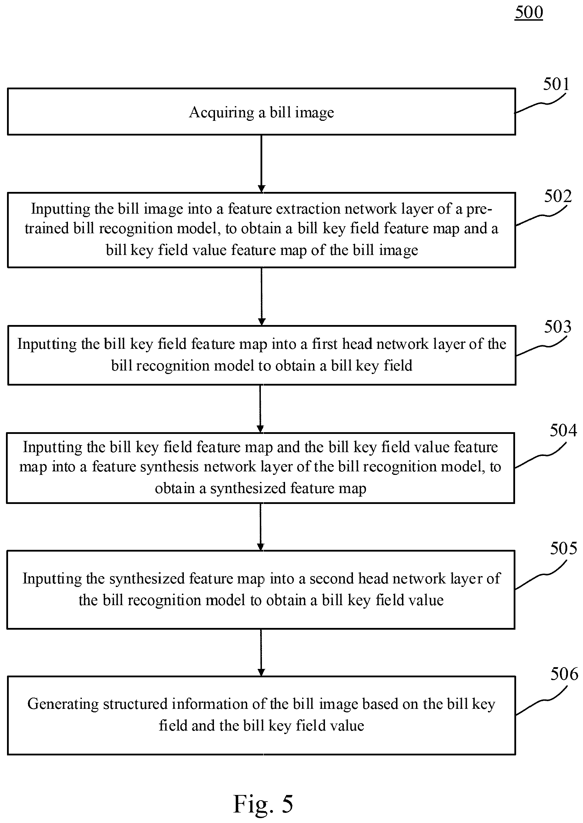

Further referring to Fig. 5, Fig. 5 illustrates a flow 500 of another embodiment of the method for recognizing a bill according to the present disclosure. The method for recognizing a bill includes the following steps:
Step 501, acquiring a bill image.
Step 502, inputting the bill image into a feature extraction network layer of a pre-trained bill recognition model, to obtain a bill key field feature map and a bill key field value feature map of the bill image.
Step 503, inputting the bill key field feature map into a first head network layer of the bill recognition model to obtain a bill key field.

In this embodiment, the particular operations of steps 501-503 are described in detail in steps 201-203 in the embodiment shown in Fig. 2, which will not be repeatedly described here.

Step 504, inputting the bill key field feature map and the bill key field value feature map into a feature synthesis network layer of the bill recognition model, to obtain a synthesized feature map.

In this embodiment, the above executing body may input the bill key field feature map and the bill key field value feature map into the feature synthesis network layer of the bill recognition model, to obtain the synthesized feature map.

In a particular example, it is assumed that the bill key field feature map and the bill key field value feature map are N-dimensional feature maps. A value corresponding to one dimension in the N-dimensional bill key field feature map and a value corresponding to one dimension in the N-dimensional bill key field value feature map are added together, a value corresponding to two dimensions in the N-dimensional bill key field feature map and a value corresponding to two dimensions in the N-dimensional bill key field value feature map are added together, and so on, and a value corresponding to N dimensions in the N-dimensional bill key field feature map and a value corresponding to N dimensions in the N-dimensional bill key field value feature map are added together until the N-dimensional synthesized feature map is obtained.

Step 505, inputting the synthesized feature map into a second head network layer of the bill recognition model to obtain a bill key field value, the feature extraction network layer being respectively connected with the feature synthesis network layer and the second head network layer, and the feature synthesis network layer being connected with a first head network layer.

In this embodiment, the above executing body may input the feature map synthesized in step 504 into the second head network layer of the bill recognition model to obtain the bill key field value. The above second head network layer may be used to determine the bill key field value according to the synthesized feature map.

Step 506, generating structured information of the bill image based on the bill key field and the bill key field value.

In this embodiment, the particular operations of step 506 are described in detail in step 205 in the embodiment shown in Fig. 2, which will not be repeatedly described here.

It may be seen from Fig. 5 that, as compared with the corresponding embodiment of Fig. 2, the flow 500 of the method for recognizing a bill in this embodiment emphasizes the step of synthesizing the bill key field feature map and the bill key field value feature map by using the feature synthesis network layer. Thus, according to the scheme described in this embodiment, the accuracy of the recognition for the bill key field value is improved.

In some alternative implementations of this embodiment, the feature synthesis network layer includes an adder, the adder being connected with the feature extraction network layer, the feature synthesis network layer and the second head network layer.

In this implementation, the feature synthesis network layer may include, but not limited to, the adder and a feature synthesis model.

Here, when training the feature synthesis model, the above executing body may train an initial model by using the synthesized feature map as an input of the feature synthesis model and the tag corresponding to the input as an expected output, to obtain the feature synthesis model. Here, the initial model may include a deep learning network (DLN), for example, a convolutional neural network (CNN).

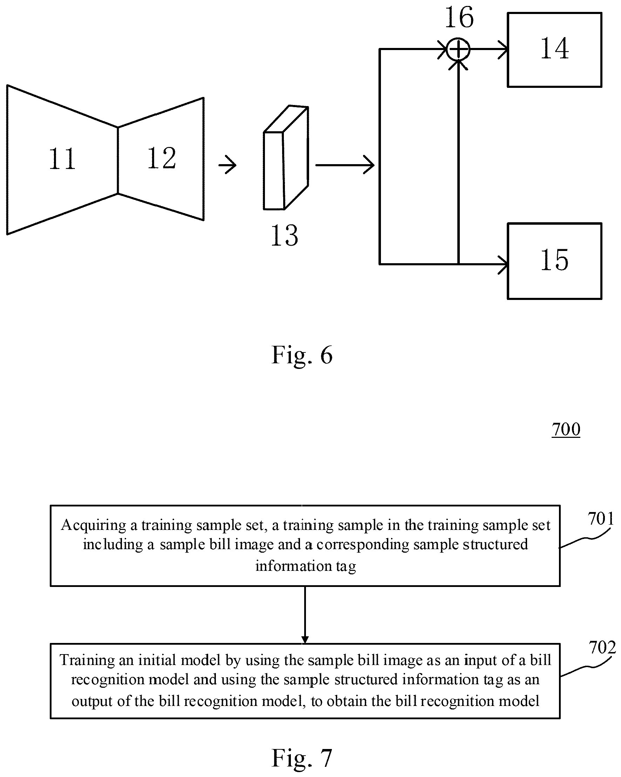

In a particular example, in Fig. 6, the bill recognition model includes a backbone network layer 11, a feature pyramid network layer 12, a bill key field feature map and a bill key field value feature map 13, a first head network layer 14, a second head network layer 15 and an adder 16.

In this implementation, the bill key field feature map and the bill key field value feature map are synthesized through the adder, and thus, the accuracy of the recognition for the bill key field value is improved.

Further referring to Fig. 7, Fig. 7 illustrates a flow 700 of an embodiment in which a bill recognition model in the method for recognizing a bill according to the present disclosure is trained. As shown in Fig. 7, in this embodiment, the step of training a bill recognition model includes:

Step 701, acquiring a training sample set, a training sample in the training sample set including a sample bill image and a corresponding sample structured information tag.

In this embodiment, the executing body of the training step may be the same as or different from the executing body of the method for recognizing a bill. If the executing bodies are the same, after training and obtaining the bill recognition model, the executing body of the training step may locally store the model structure information of the trained bill recognition model and the parameter value of a model parameter. If the executing bodies are different, after training and obtaining the bill recognition model, the executing body of the training step may send the model structure information of the trained bill recognition model and the parameter value of the model parameter to the executing body of the method for recognizing a bill.

In this embodiment, the executing body of the training step may acquire the training sample set in various ways. As an example, a training sample set stored in a database server may be acquired from the database server by means of a wired connection or a wireless connection. As another example, a training sample set may be collected by a terminal. The training sample in the above training sample set includes the sample bill image and the corresponding sample structured information tag.

Step 702, training an initial model by using sample bill image as an input of a bill recognition model and using the sample structured information tag as an output of the bill recognition model to obtain the bill recognition model.

In this embodiment, after obtaining the structured information of the sample bill image and the sample structured information tag, the above executing body may train the initial model by using the structured information of the sample bill image and the sample structured information tag, to obtain the bill recognition model. During the training, the executing body may use the structured information of the sample bill image as the input of the bill recognition model and use the inputted corresponding sample structured information tag as an expected output, to obtain the bill recognition model. The above initial model may be a probability model, a classification model or an other classifier in the existing technology or a technology developed in the future. For example, the initial model may include any one of: an extreme gradient boosting tree model (XGBoost), a logistic regression model (LR), a deep neural network model (DNN), and a gradient boosting decision tree model (GBDT).

According to the method provided in the embodiment of the present disclosure, training is performed based on the sample bill image and the sample structured information tag to obtain the bill recognition model, thus implementing the accurate recognition for the bill key field and the bill key field value included in the structured information in the bill image.

In some alternative implementations of this embodiment, training the initial model by using the sample bill image as an input of the bill recognition model and using the sample structured information tag as the output of the bill recognition model to obtain the bill recognition model comprises: performing, for the training sample in the training sample set, following training: inputting the sample bill image of the training sample into a feature extraction network layer of the initial model to obtain a sample bill key field feature map and a sample bill key field value feature map of the sample bill image; inputting the sample bill key field feature map into a first head network layer of the bill recognition model to obtain a sample bill key field; processing the sample bill key field value feature map by using a second head network layer of the bill recognition model to obtain a sample bill key field value; generating the structured information of the sample bill image based on the sample bill key field and the sample bill key field value; determining a total loss function value based on the structured information of the sample bill image and the sample structured information tag; using the initial model as the bill recognition model in response to the total loss function value satisfying a target value; and continuing to perform the training in response to the total loss function value not satisfying the target value. A plurality of iterations are repeated until the bill recognition model is trained.

In this implementation, the executing body of the training step may input the training sample in the training sample set into the feature extraction network layer of the initial model. By detecting and analyzing the sample bill image of the training sample, the sample bill key field feature map and the sample bill key field value feature map of the sample bill image may be obtained. Here, the initial model generally includes the feature extraction network layer, a first head network layer and a second head network layer. The feature extraction network layer of the initial model may be used to extract, from the sample bill image, the sample bill key field feature map and the sample bill key field value feature map.

Here, the initial model may be various existing neural network models created based on machine learning techniques. The neural network models may have various existing neural network structures (e.g., a VGGNet (visual geometry group network), and a ResNet (residual neural network)).

In this implementation, the executing body of the training step may input the sample bill key field feature map into the first head network layer of the initial model, to obtain the sample bill key field. The first head network layer of the initial model may be used to obtain the sample bill key field according to the sample bill key field feature map.

In this implementation, the executing body of the training step may input the sample bill key field value feature map into the second head network layer of the initial model to obtain the sample bill key field value. The second head network layer of the initial model may be used to obtain the sample bill key field value according to the sample bill key field value feature map.

In this implementation, the executing body of the training step may determine the total loss function value based on the structured information of the sample bill image and the sample structured information tag.

In this embodiment, a loss function is generally used to measure the degree of inconsistency between a predicted value of the model and a true value (e.g., a key value pair tag). In general, the smaller a loss function value is, the better the robustness of the model is. The loss function may be set according to actual requirements. For example, the above loss function may include a cross entropy loss function.

In this implementation, the executing body of the training step may compare the total loss function value with a preset target value, and determine whether the training for the initial model is completed according to the comparison result. If the total loss function value satisfies the preset target value, the executing body of the training step may determine the initial model as the bill recognition model. The above target value may generally be used to indicate the degree of inconsistency between the predicted value and the true value. That is, when the total loss function value reaches the target value, it may be considered that the predicted value is close or approximate to the true value. The target value may be set according to actual requirements.

In this embodiment, the executing body of the training step may continue to perform the training when the total loss function value does not satisfy the target value.

In this implementation, the bill key field feature map and the bill key field value feature map are obtained using the feature extraction network layer of the initial model. Afterwards, the sample bill key field and the sample bill key field value of the sample bill image are obtained based on the first head network layer and the second head network layer of the initial model. Next, the structured information of the sample bill image is generated based on the sample bill key field and the sample bill key field value. Then, the total loss function value is determined based on the structured information of the sample bill image and the sample structured information tag. Finally, the training for the initial model is implemented based on the total loss function value and the target value, to obtain the bill recognition model. Thus, the accurate recognition for the bill key field and the bill key field value included in the structured information in the bill image is implemented.

Here, the executing body of the training step may store the generated bill recognition model locally, or may send the generated bill recognition model to an other electronic device.

According to the method provided in the above embodiment of the present disclosure, whether the training for the initial model is completed is determined through the comparison result between the total loss function value and the target value. When the total loss function value reaches the target value, it may be considered that the predicted value is close or approximate to the true value. At this time, the initial model may be determined as the bill recognition model. The model generated in this way has a high robustness.

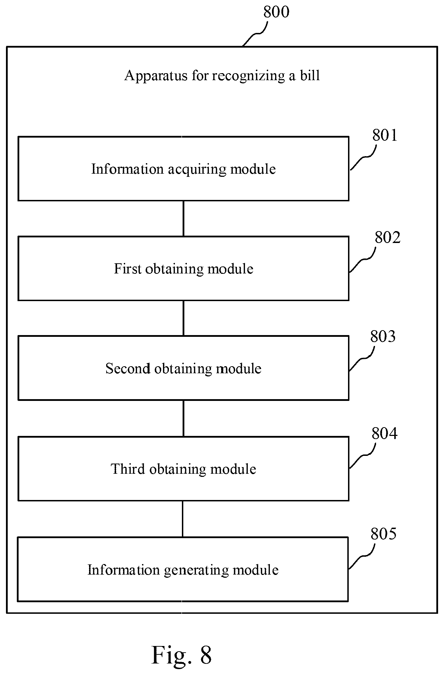

Further referring to Fig. 8, as an implementation of the method shown in the above drawings, the present disclosure provides an embodiment of an apparatus for recognizing a bill. The embodiment of the apparatus corresponds to the embodiment of the method shown in Fig. 2, and the apparatus may be applied in various electronic devices.

As shown in Fig. 8, the apparatus 800 for recognizing a bill in this embodiment may include: an information acquiring module 801, a first obtaining module 802, a second obtaining module 803, a third obtaining module 804 and an information generating module 805. Here, the information acquiring module 801 is configured to acquire a bill image. The first obtaining module 802 is configured to input the bill image into a feature extraction network layer of a pre-trained bill recognition model, to obtain a bill key field feature map and a bill key field value feature map of the bill image. The second obtaining module 803 is configured to input the bill key field feature map into a first head network layer of the bill recognition model to obtain a bill key field. The third obtaining module 804 is configured to process the bill key field value feature map by using a second head network layer of the bill recognition model to obtain a bill key field value, the feature extraction network layer being respectively connected with the first head network layer and the second head network layer. The information generating module 805 is configured to generate structured information of the bill image based on the bill key field and the bill key field value.

In this embodiment, for particular processes of the information acquiring module 801, the first obtaining module 802, the second obtaining module 803, the third obtaining module 804 and the information generating module 805 in the apparatus 800 for recognizing a bill, and their technical effects, reference may be respectively made to relative descriptions of steps 201-205 in the corresponding embodiment of Fig. 2, which will not be repeatedly described here. Here, the first obtaining module 802, the second obtaining module 803 and the third obtaining module 803 may be the same module, or may be different modules.

In some alternative implementations of this embodiment, the apparatus for recognizing a bill further includes: a feature synthesizing module, configured to input the bill key field feature map and the bill key field value feature map into a feature synthesis network layer of the bill recognition model, to obtain a synthesized feature map. The third obtaining module 804 is further configured to: input the synthesized feature map into the second head network layer of the bill recognition model to obtain the bill key field value, the feature extraction network layer being respectively connected with the feature synthesis network layer and the second head network layer, and the feature synthesis network layer being connected with the first head network layer.

In some alternative implementations of this embodiment, the feature extraction network layer includes a backbone network layer and a feature pyramid network layer.

In some alternative implementations of this embodiment, the bill recognition model further includes a first convolutional layer, and the feature extraction network layer, the first convolutional layer and the first head network layer are connected in sequence.

In some alternative implementations of this embodiment, the bill recognition model further includes a second convolutional layer, and the feature extraction network layer, the second convolutional layer and the second head network layer are connected in sequence.

In some alternative implementations of this embodiment, the feature synthesis network layer includes an adder, the adder being connected with the feature extraction network layer, the feature synthesis network layer and the second head network layer.

In some alternative implementations of this embodiment, the apparatus for recognizing a bill further includes: a sample acquiring module (not shown), configured to acquire a training sample set, a training sample in the training sample set including a sample bill image and a corresponding sample structured information tag; and a model training module (not shown), configured to train an initial model by using the sample bill image as an input of the bill recognition model and using the sample structured information tag as an output of the bill recognition model, to obtain the bill recognition model.

In some alternative implementations of this embodiment, the model training module is further configured to: perform, for the training sample in the training sample set, following training: inputting the sample bill image of the training sample into a feature extraction network layer of the initial model, to obtain a sample bill key field feature map and a sample bill key field value feature map of the sample bill image; inputting the sample bill key field feature map into the first head network layer of the bill recognition model, to obtain a sample bill key field; processing the sample bill key field value feature map by using the second head network layer of the bill recognition model, to obtain a sample bill key field value; generating structured information of the sample bill image based on the bill key field and the bill key field value; determining a total loss function value based on the structured information and the sample structured information tag; using the initial model as the bill recognition model in response to the total loss function value satisfying a target value; and continuing to perform the training in response to the total loss function value not satisfying the target value.

According to an embodiment of the present disclosure, the present disclosure further provides an electronic device, a readable storage medium and computer program product.

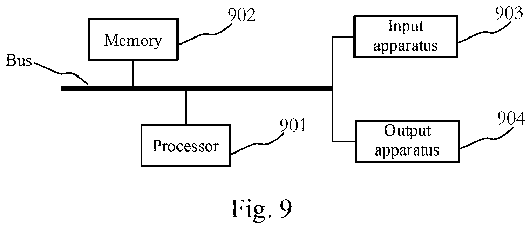

As shown in Fig. 9, Fig. 9 is a block diagram of an electronic device of a method for recognizing a bill according to embodiments of the present disclosure. The electronic device is intended to represent various forms of digital computers such as a laptop computer, a desktop computer, a workstation, a personal digital assistant, a server, a blade server, a mainframe computer, and other appropriate computers. The electronic device may also represent various forms of mobile apparatuses such as personal digital processing, a cellular telephone, a smart phone, a wearable device and other similar computing apparatuses. The parts shown herein, their connections and relationships, and their functions are only as examples, and not intended to limit implementations of the present disclosure as described and/or claimed herein.

As shown in Fig. 9, which is a block diagram of an electronic device of a method for recognizing a bill according to an embodiment of the present disclosure. The electronic device is intended to represent various forms of digital computers, such as laptop computers, desktop computers, workbenches, personal digital assistants, servers, blade servers, mainframe computers, and other suitable computers. The electronic device may also represent various forms of mobile apparatuses, such as personal digital processing, cellular phones, smart phones, wearable devices, and other similar computing apparatuses. The components shown herein, their connections and relationships, and their functions are merely examples, and are not intended to limit the implementation of the present disclosure described and/or claimed herein.

As shown in Fig. 9, the electronic device includes: one or more processors 901, a memory 902, and interfaces for connecting various components, including high-speed interfaces and low-speed interfaces. The various components are connected to each other using different buses, and may be installed on a common motherboard or in other methods as needed. The processor may process instructions executed within the electronic device, including instructions stored in or on the memory to display graphic information of GUI on an external input/output apparatus (such as a display device coupled to the interface). In other embodiments, a plurality of processors and/or a plurality of buses may be used together with a plurality of memories if desired. Similarly, a plurality of electronic devices may be connected, and the devices provide some necessary operations (for example, as a server array, a set of blade servers, or a multi-processor system). In Fig. 9, one processor 901 is used as an example.

The memory 902 is a non-transitory computer readable storage medium provided by the present disclosure. The memory stores instructions executable by at least one processor, so that the at least one processor performs the method for recognizing a bill provided by the present disclosure. The non-transitory computer readable storage medium of the present disclosure stores computer instructions for causing a computer to perform the method for recognizing a bill provided by the present disclosure.

The memory 902, as a non-transitory computer readable storage medium, may be used to store non-transitory software programs, non-transitory computer executable programs and modules, such as program instructions/modules corresponding to the method for recognizing a bill in the embodiments of the present disclosure (for example, the information acquiring module 801, the first obtaining module 802, the second obtaining module 803, the third obtaining module 804 and the information generating module 805 shown in Fig. 8). The processor 901 executes the non-transitory software programs, instructions, and modules stored in the memory 902 to execute various functional applications and data processing of the server, that is, to implement the method for recognizing a bill in the foregoing method embodiment.

The memory 902 may include a storage program area and a storage data area, where the storage program area may store an operating system and at least one function required application program; and the storage data area may store data created by the use of the electronic device according to the method for processing parking, etc. In addition, the memory 902 may include a high-speed random access memory, and may also include a non-transitory memory, such as at least one magnetic disk storage device, a flash memory device, or other non-transitory solid-state storage devices. In some embodiments, the memory 902 may optionally include memories remotely provided with respect to the processor 901, and these remote memories may be connected to the electronic device of the method for recognizing a bill through a network. Examples of the above network include but are not limited to the Internet, intranet, local area network, mobile communication network, and combinations thereof.

The electronic device of the method for recognizing a bill may further include: an input apparatus 903 and an output apparatus 904. The processor 901, the memory 902, the input apparatus 903, and the output apparatus 904 may be connected through a bus or in other methods. In Fig. 9, connection through a bus is used as an example.

The input apparatus 903 may receive input digital or character information, and generate key signal inputs related to user settings and function control of the electronic device of the method for processing parking, such as touch screen, keypad, mouse, trackpad, touchpad, pointing stick, one or more mouse buttons, trackball, joystick and other input apparatuses. The output apparatus 904 may include a display device, an auxiliary lighting apparatus (for example, LED), a tactile feedback apparatus (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, dedicated ASICs (application specific integrated circuits), computer hardware, firmware, software, and/or combinations thereof. These various embodiments may include: being implemented in one or more computer programs that may be executed and/or interpreted on a programmable system that includes at least one programmable processor. The programmable processor may be a dedicated or general-purpose programmable processor, and may receive data and instructions from a storage system, at least one input apparatus, and at least one output apparatus, and transmit the data and instructions to the storage system, the at least one input apparatus, and the at least one output apparatus.

These computing programs (also referred to as programs, software, software applications, or codes) include machine instructions of the programmable processor and may use high-level processes and/or object-oriented programming languages, and/or assembly/machine languages to implement these computing programs. As used herein, the terms "machine readable medium" and "computer readable medium" refer to any computer program product, device, and/or apparatus (for example, magnetic disk, optical disk, memory, programmable logic apparatus (PLD)) used to provide machine instructions and/or data to the programmable processor, including machine readable medium that receives machine instructions as machine readable signals. The term "machine readable signal" refers to any signal used to provide machine instructions and/or data to the programmable processor.

In order to provide interaction with a user, the systems and technologies described herein may be implemented on a computer, the computer has: a display apparatus for displaying information to the user (for example, CRT (cathode ray tube) or LCD (liquid crystal display) monitor); and a keyboard and a pointing apparatus (for example, mouse or trackball), and the user may use the keyboard and the pointing apparatus to provide input to the computer. Other types of apparatuses may also be used to provide interaction with the user; for example, feedback provided to the user may be any form of sensory feedback (for example, visual feedback, auditory feedback, or tactile feedback); and any form (including acoustic input, voice input, or tactile input) may be used to receive input from the user.

The systems and technologies described herein may be implemented in a computing system that includes backend components (e.g., as a data server), or a computing system that includes middleware components (e.g., application server), or a computing system that includes frontend components (for example, a user computer having a graphical user interface or a web browser, through which the user may interact with the implementations of the systems and the technologies described herein), or a computing system that includes any combination of such backend components, middleware components, or frontend components. The components of the system may be interconnected by any form or medium of digital data communication (e.g., communication network). Examples of the communication network include: local area networks (LAN), wide area networks (WAN), and the Internet.

The computer system may include a client and a server. The client and the server are generally far from each other and usually interact through the communication network. The relationship between the client and the server is generated by computer programs that run on the corresponding computer and have a client-server relationship with each other.

Artificial intelligence is a subject of studying computers to simulate certain human thinking processes and intelligent behaviors (such as learning, reasoning, thinking, planning, etc.). It has both hardware-level technologies and software-level technologies. Artificial intelligence hardware technologies generally include technologies such as sensors, dedicated artificial intelligence chips, cloud computing, distributed storage, and big data processing. And artificial intelligence software technologies mainly include several major directions such as computer vision technology, speech recognition technology, natural speech processing technology, machine learning/depth learning, big data processing technology, and knowledge graph technology.

According to the technical solution in the present disclosure, a bill image is first acquired. Afterwards, the bill image is inputted into a feature extraction network layer of a pre-trained bill recognition model, to obtain a bill key field feature map and a bill key field value feature map of the bill image. Next, the bill key field feature map is inputted into a first head network layer of the bill recognition model to obtain a bill key field. Then, the bill key field value feature map is processed by using a second head network layer of the bill recognition model, to obtain a bill key field value, the feature extraction network layer being respectively connected with the first head network layer and the second head network layer. Finally, structured information of the bill image is generated based on the bill key field and the bill key field value. According to the present disclosure, the bill key field feature map and the bill key field value feature map are obtained by using the feature extraction network layer of the bill recognition model. Then, based on the first head network layer and the second head network layer of the bill recognition model, the recognition for the bill key field and the bill key field value included in the structured information in the bill image may be accurately implemented.

It should be understood that the various forms of processes shown above may be used to reorder, add, or delete steps. For example, the steps described in the present disclosure may be performed in parallel, sequentially, or in different orders. As long as the desired results of the technical solution disclosed in the present disclosure may be achieved, no limitation is made herein.

The above particular embodiments do not constitute limitation on the protection scope of the present disclosure. Those skilled in the art should understand that various modifications, combinations, sub-combinations and substitutions may be made according to design requirements and other factors. Any modification, equivalent replacement and improvement made within the spirit and principle of the present disclosure shall be included in the protection scope of the present disclosure.

## Claims

1. A method for recognizing a bill, comprising:
acquiring (201) a bill image;
inputting (202) the bill image into a feature extraction network layer of a pre-trained bill recognition model, to obtain a bill key field feature map and a bill key field value feature map of the bill image;
inputting (203) the bill key field feature map into a first head network layer of the bill recognition model, to obtain a bill key field;
processing (204) the bill key field value feature map by using a second head network layer of the bill recognition model, to obtain a bill key field value, wherein the feature extraction network layer being respectively connected with the first head network layer and the second head network layer; and
generating (205) structured information of the bill image based on the bill key field and the bill key field value.

2. The method according to claim 1, further comprising:
inputting (504) the bill key field feature map and the bill key field value feature map into a feature synthesis network layer of the bill recognition model, to obtain a synthesized feature map,
wherein the processing comprises:
inputting (505) the synthesized feature map into the second head network layer of the bill recognition model, to obtain the bill key field value, wherein the feature extraction network layer being respectively connected with the feature synthesis network layer and the second head network layer, and the feature synthesis network layer being connected with the first head network layer.

3. The method according to claim 1 or 2, wherein the feature extraction network layer comprises a backbone network layer and a feature pyramid network layer.

4. The method according to claim 1 or 2, wherein the bill recognition model further comprises a first convolutional layer, and the feature extraction network layer, the first convolutional layer and the first head network layer are connected in sequence.

5. The method according to claim 4, wherein the bill recognition model further comprises a second convolutional layer, and the feature extraction network layer, the second convolutional layer and the second head network layer are connected in sequence.

6. The method according to any one of claims 2-5, wherein the feature synthesis network layer comprises an adder, the adder being connected with the feature extraction network layer, the feature synthesis network layer and the second head network layer.

7. The method according to any one of claims 1-6, wherein the bill recognition model is trained and obtained by:
acquiring (701) a training sample set, wherein a training sample in the training sample set comprises a sample bill image and a corresponding sample structured information tag; and
training (702) an initial model by using the sample bill image as an input of the bill recognition model and using the sample structured information tag as an output of the bill recognition model, to obtain the bill recognition model.

8. The method according to claim 7, wherein the training (702) comprises:
performing, for the training sample in the training sample set, following training: inputting the sample bill image of the training sample into a feature extraction network layer of the initial model, to obtain a sample bill key field feature map and a sample bill key field value feature map of the sample bill image;
inputting the sample bill key field feature map into the first head network layer of the bill recognition model, to obtain a sample bill key field;
processing the sample bill key field value feature map by using the second head network layer of the bill recognition model, to obtain a sample bill key field value;
generating structured information of the sample bill image based on the sample bill key field and the sample bill key field value;
determining a total loss function value based on the structured information of the sample bill image and the sample structured information tag;
using the initial model as the bill recognition model in response to the total loss function value satisfying a target value; and
continuing to perform the training in response to the total loss function value not satisfying the target value.

9. An apparatus for recognizing a bill, comprising:
an information acquiring module (801), configured to acquire a bill image;
a first obtaining module (802), configured to input the bill image into a feature extraction network layer of a pre-trained bill recognition model, to obtain a bill key field feature map and a bill key field value feature map of the bill image;
a second obtaining module (803), configured to input the bill key field feature map into a first head network layer of the bill recognition model, to obtain a bill key field;
a third obtaining module (804), configured to process the bill key field value feature map by using a second head network layer of the bill recognition model, to obtain a bill key field value, wherein the feature extraction network layer being respectively connected with the first head network layer and the second head network layer; and
an information generating module (805), configured to generate structured information of the bill image based on the bill key field and the bill key field value.

10. The apparatus according to claim 9, further comprising:
a feature synthesizing module, configured to input the bill key field feature map and the bill key field value feature map into a feature synthesis network layer of the bill recognition model, to obtain a synthesized feature map,
wherein the third obtaining module (804) is further configured to:
input the synthesized feature map into the second head network layer of the bill recognition model, to obtain the bill key field value, wherein the feature extraction network layer being respectively connected with the feature synthesis network layer and the second head network layer, and the feature synthesis network layer being connected with the first head network layer.

11. The apparatus according to claim 9 or 10, wherein the feature extraction network layer comprises a backbone network layer and a feature pyramid network layer.

12. The apparatus according to claim 9 or 10, wherein the bill recognition model further comprises a first convolutional layer, and the feature extraction network layer, the first convolutional layer and the first head network layer are connected in sequence.

13. An electronic device, comprising:
at least one processor (901); and
a memory (902), communicated with the at least one processor (901),
wherein the memory (902) stores an instruction executable by the at least one processor (9021), and the instruction is executed by the at least one processor (901), to enable the at least one processor (901) to perform the method according to any one of claims 1-8.

14. A non-transitory computer readable storage medium, storing a computer instruction, wherein the computer instruction is used to cause a computer to perform the method according to any one of claims 1-8.

15. A computer program product, comprising a computer program, wherein the computer program, when executed by a processor, implements the method according to any one of claims 1-8.
